(19) **Europäisches Patentamt European Patent Office Office européen des brevets**

(11) **EP 4 672 180 A1**

(12) **EUROPEAN PATENT APPLICATION**

(43) Date of publication:
**31.12.2025** Bulletin 2026/01

(21) Application number: **24306022.5**

(22) Date of filing: **25.06.2024**

(51) International Patent Classification (IPC):
**G06V 20/69** (2022.01)

(52) Cooperative Patent Classification (CPC):
**G06V 20/69; G06V 20/698**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **bioMérieux**
**69280 MARCY-L'ETOILE (FR)**

(72) Inventors:
• **Traversi, Andrea**
  **50100 Prato (IT)**

• **Rossi, Veronica Lucia**
  **50139 Florence (IT)**
• **Chini, Giorgio**
  **50012 Bagno a Ripoli (IT)**
• **Mecocci, Alessandro**
  **50144 Forence (IT)**
• **Bonechi, Simone**
  **53034 Colle di Val d'Elsa (IT)**
• **Andreini, Paolo**
  **53100 Siena (IT)**

(74) Representative: **bioMérieux PI Groupement mandataires**
**bioMérieux**
**69280 Marcy l'Etoile (FR)**

(54) **ENHANCED PROCESSING OF FLUORESCENCE IMAGE FOR MICROORGANISM DETECTION**

(57)     It is disclosed a method for processing a fluorescence image for detection of microorganisms in a sample, comprising:
- Receiving a fluorescence image that has been acquired from a sample container comprising a plurality of wells of at least two different sizes, and the fluorescence image comprises a plurality of signal regions corresponding respectively to each well, and
- Processing the fluorescence image to classify at least one considered signal region as positive or negative, comprising:
◦ For each signal region,
  ▪ selecting a subset of pixels,

▪ computing an indicator of the intensity of the selected subset,

◦ For each well size, computing statistical features (230) of the indicator of the intensity of selected subsets of pixels, computed for a plurality of signal regions corresponding to said well size, and
▪ Determining whether the considered signal region is positive or negative, by applying a trained classifier algorithm (240).

**FIG. 3b**

EP 4 672 180 A1

**Description**

**Technical Field**

This disclosure relates to a method and device for processing a fluorescence image of a sample to detect, and possibly quantify, the presence of a microorganism therein. The method finds notable application in the fields of diagnosis and detection of contaminants in food, pharmaceutical products or cosmetic products.

**Background Art**

Microbial detection and quantification play a crucial role in various fields, including healthcare, food safety, and environmental monitoring. Traditional methods for detecting and quantifying microorganisms often rely on culture-based techniques, which involve growing microorganisms in a controlled environment and counting colony-forming units to estimate the number of viable microorganisms present in a sample. One commonly used technique for quantification is the Most Probable Number (MPN) method, which involves preparing serial dilutions of the sample and determining the presence or absence of microbial growth based on the number of positive wells.

In particular, a solution for automated enumeration of microorganisms in samples is already marketed by the applicant under the trademark Tempo®. This solution provides devices and software for a complete enumeration test of sample. This test comprises steps of inoculating a sample with a relevant reagent, and filling a sample container in the form of a card comprising a plurality of wells having different sizes, such that each well comprises a quantity of the sample, a material suitable for forming a culture medium for a microorganism which presence is tested within the sample, and a diluent and a fluorescent substrate . Further, the wells sizes are associated with different dilution ratios of the samples, in order to enable enumeration of the microorganisms by application of the Most-Probable-Number method.

After a duration of incubation of the sample in sample holder, a fluorescence reading of the sample holder is performed. Fluorescence is the ability from matter to emit light at a certain wavelength after absorbing electromagnetic radiation. Accordingly, a fluorescence measurement is performed by illuminating the sample at a selected excitation wavelength which corresponds to the excitation wavelength of the substrate that is activated by the microorganism which presence is tested. The fluorescence measurement consists of two phasis, the acquisition of the image itself and a processing algorithm which analyses the fluorescence emission of the sample induced by the excitation in the various wells and calculates a quantitative fluorescence metric for each well. Finally, applying an additional interpretation algorithm, it is possible to determine whether each well is positive or negative and perform enumeration of the microorganisms by the MPN method.

However, the current method for processing a fluorescence image requires a manual configuration of parameters and a complex knowledge base required for interpreting fluorescence signals. This can introduce user error and inconsistency, hindering the efficiency and reliability of the microbial detection process. In addition, this manual fine-tuning of interpretation parameters is a complex and cumbersome process, resulting in costly analyses.

**Summary**

The present disclosure aims at improving the prior art.

In particular, an aim of the present disclosure is to enable processing fluorescence image of samples in a simpler manner, and in particular in a manner that does not require manual tuning of algorithm parameters between various assays.

Another aim of the present disclosure is to provide a method for processing a fluorescence image that achieves at least the same performance in terms of microorganism detection and enumeration as the prior art.

Accordingly, it is proposed a computer-implemented method for processing a fluorescence image for detection of microorganisms in a sample, comprising:

- Receiving a fluorescence image of the sample, wherein the fluorescence image has been acquired from a sample container comprising a plurality of wells of at least two different sizes, and the fluorescence image comprises a plurality of signal regions corresponding respectively to each well, and

- Processing the fluorescence image to classify at least one considered signal region as positive or negative, wherein one of positive or negative indicates microorganism growth in the corresponding well, comprising:

  ○ For each of a plurality of signal regions in the fluorescence image, including at least the considered signal region,

    ■ selecting a subset of pixels within the signal region,

■ computing an indicator of the intensity of the selected subset of pixels,

◦ For each well size, computing statistical features related to a distribution of the indicator of the intensity of selected subsets of pixels, computed for a plurality of signal regions corresponding to said well size, and

◦ Determining whether the considered signal region is positive or negative, by applying a trained classifier algorithm to input data comprising at least:

■ the indicator of the intensity of the selected subset of pixels computed for the considered signal region, and

■ the statistical features representing the distribution of the indicator computed for each well size.

A fluorescence image is an image acquired from a sample container that has been previously illuminated with a determined wavelength, the image also being acquired in a determined range of wavelength in order to detect a fluorescence signal that may be emitted by the sample after illumination. A signal region is a region of the image where a fluorescence signal is expected, even though a fluorescence signal may not necessary be detected, and which corresponds to a position of a well comprising the tested sample.

The proposed method enables processing a fluorescence image for detection and enumeration of microorganisms in a sample, wherein the classification of a well as positive or negative is implemented by a trained classifier. By leveraging machine learning techniques, such as a Support Vector Machine (SVM), the method is able to classify signal regions within a fluorescence image as positive or negative, indicating the presence or absence of microorganism growth in the corresponding wells. This eliminates the need for extensive manual configuration of parameters and a complex knowledge base, resulting in a streamlined and more efficient workflow. The use of machine learning algorithms also enhances the accuracy and consistency of microorganism detection and quantification, improving the reliability of the analysis process.

In embodiments, determining whether a considered signal region is positive or negative further comprises selecting, based on the size of the well corresponding to the considered signal region, one among a plurality of classifier algorithms, where each classifier algorithms has been trained to classify signal regions corresponding to a respective well size.

In embodiments, the classifier algorithm is a Support Vector Machine (SVM) algorithm.

In embodiments, the SVM has a rbf or linear kernel.

In embodiments, the classifier algorithm has been trained on a training dataset comprising, for each of a plurality of fluorescence images, an indication that each signal region is positive or negative.

In embodiments, the indicator of the intensity of the selected subset of pixels is chosen among:

-    a mean intensity of the selected subset of pixels,

-    a mode of the intensity of the selected subset of pixels, and

-    a determined percentile of the selected subset of pixels.

In embodiments, the statistical features representative of the distribution of the indicator of the intensity of the selected subsets of pixels for the signal regions corresponding to a well size comprise a mean and a standard deviation of said indicator, over the plurality of signal regions of the image corresponding to the same well size.

By incorporating the mean and standard deviation of the indicator of intensity for signal regions corresponding to the same well size, the method enhances the accuracy of the classification process. Indeed, each well is classified as positive or negative, taking into account the distributions of pixels of a plurality of signal regions of all the different well sizes.

In embodiments, selecting a subset of pixels from a signal region comprises computing a histogram of the pixels intensities of a signal region, and selecting pixels corresponding to a predefined range of percentiles.

In embodiments, each well size is associated with a respective predefined range of percentiles, and selecting pixels corresponding to a predefined range of percentiles comprises selecting the range of percentiles associated with the size of the well corresponding to the signal region.

This preprocessing step refines the selection of pixels that are most representative of the actual signal, improving the reliability of subsequent calculations such as the determination of the mean and standard deviation. By focusing on the most relevant intensity data, the method ensures that the features used for classification are not skewed by extreme values, leading to more consistent and accurate well classification outcomes.

In embodiments, the fluorescence image has been acquired from a sample container where each well size corresponds to a respective dilution ratio of the sample, and the method comprises classifying a plurality of signal regions corresponding to each well size of the fluorescence image as positive or negative and computing, from the classifications of the signal regions, a Most Probable Number of microorganisms present in the sample.

According to another object, it is disclosed a computer-program product comprising code instructions for implementing the method according to the description above, when it is implemented by a computer.

According to another object, it is disclosed a computer, configured for implementing the method according to the description above.

According to still another object, it is disclosed a device for measuring the concentration of microorganisms in a sample, comprising:

- A support, configured for receiving a sample container, comprising a plurality of wells of at least two different sizes, where each well size corresponds to a respective dilution ratio of the sample,

- A light source, configured for illuminating the sample container with at least one determined wavelength,

- A detector, configured for acquiring at least one fluorescence image comprising fluorescence emissions of the sample due to its illumination by the light source, and

- A computer, configured for processing the acquired fluorescence image to determine the concentrations of microorganisms in the sample,

characterized in that the computer is configured for implementing the method according to the description above.

**Brief Description of Drawings**

Other features, details and advantages will be shown in the following detailed description and on the figures, on which:

- Figure 1 schematically represents a device for measuring the concentrations of microorganisms in a sample, according to an embodiment.

- Figure 2 represents an example of a sample container.

- Figure 3a is an example of a fluorescence image of a sample container according to figure 2.

- Figure 3b is an example of a formatted fluorescence image derived from the image of figure 3a.

- Figure 4 is an example of a histogram distribution of the grayscale values of the pixels of a signal region of the fluorescence image.

- Figure 5 schematically shows the main steps of a method for processing a fluorescence image according to embodiments.

**Description of Embodiments**

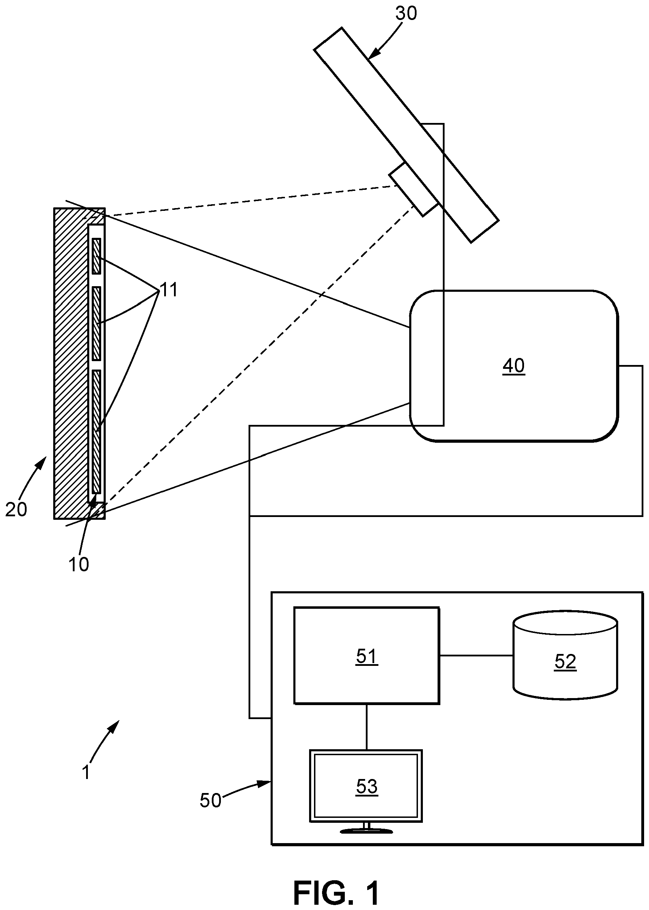

With reference to figure 1, is shown an example of a device 1 for performing a fluorescence measurement on a sample, and determining therefrom the concentrations of a microorganism of interest in the sample. The sample may be from various origins, for example of food, environmental, veterinary, clinical, pharmaceutical or cosmetic origin.

Amongst the samples of food origin, non-exhaustive mention may be made of a sample of dairy products (yogurts, cheeses, ...), meat, fish, egg, fruit, vegetable, water, beverages (milk, fruit juice, soda, etc.). Of course, these samples of food origin may also come from sauces or more complex meals, or from unprocessed or partially processed raw materials. A food sample may also be derived from an animal feed, such as oil cakes, animal meals.

As indicated previously, the biological sample may be of environmental origin and may consist, for example, of a surface sample, water sample, etc.

The sample may also consist of a biological sample, of clinical, human or animal origin, which may correspond to specimens of biological fluid (urine, whole blood or derivatives such as serum, plasma, saliva, pus, cerebrospinal fluid, etc.), of stools (for example cholera-induced diarrhea), of specimens from the nose, throat, skin, wounds, organs, tissues or isolated cells. This list is obviously not exhaustive.

Generally, the term "sample" refers to a part or a quantity, and more particularly a small part or a small quantity, sampled from one or more entities for the purposes of analysis. This sample may possibly have undergone pre-treatment, including for example crushing, in particular if the starting entity is solid-state, mixture, in particular inoculation with a relevant reagent, dilution and incubation for a determined incubation period. The analyzed sample is likely to contain-or is suspected of containing-at least one analyte representative of the presence of microorganisms or of a disease to be detected, characterized or monitored.

For the purpose of performing a fluorescence measurement, the sample is contained in a sample container 10. The sample container comprises a plurality of wells 11 or cavities, suitable for containing a determined quantity of the sample to be analyzed, in a liquid state. The wells of the sample container exhibit at least two different well sizes, which are associated with different dilution ratios of the sample. For instance, the sample container 10 comprises at least two well sizes. However, the sample container preferably comprises at least three different well sizes, corresponding to three different dilution ratios, where the bigger the well, the bigger the corresponding dilution ratio (i.e. the more diluted the sample is within the well). Furthermore, the sample container comprises a plurality of wells of each well size.

Within the sample container, at least one wall of each well is transparent to the wavelengths used for illuminating the sample contained therein, and at least one wall, possibly the same, transparent to the wavelengths emitted by the sample due to fluorescence. For instance, the wells may comprise walls formed of polypropylene, glass, polymetil, metacrilate, polystyrene, polycarbonate or other optical plastics, depending on the illumination and fluorescence wavelength ranges. In embodiments, at least one inner wall of each well may also be reflective in order to amplify the fluorescence signal.

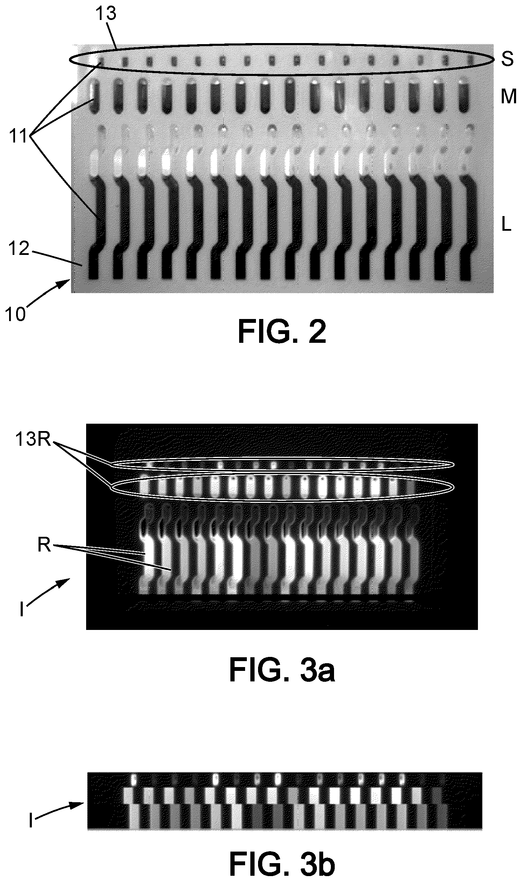

With reference to figure 2, is shown a non-limiting example of a sample container 10 that may be used within the context of the present disclosure. According to this example, the container may exhibit a parallelepipedal shape, for instance similar to the shape of a card, having two main dimensions in length and height and a reduced thickness dimension, i.e. the thickness of the card is strictly smaller than its height and length. The sample container 10 thus exhibits two opposite main surfaces 12.

The sample container 10 comprises a plurality of alignments 13 of wells 11 along the length of the sample container, where all the wells of a same alignment exhibit the same size and correspond to the same dilution ratio of the sample contained therein. Furthermore, all the wells may be comprised within the thickness of the sample container, and each well may have at least one transparent wall arranged within a main surface 12 of the sample container. In embodiments, each well may have two transparent opposing walls arranged within the opposite main surfaces of the sample container. The number and configuration of the transparent walls of the wells may vary according to the configuration of the illumination and imaging components of the device. In the example shown in figure 2, the sample container thus comprises three alignments of wells, corresponding to three respective sizes herein after denoted "S" (for Small), "M" (for Medium) and "L" (for Large), and corresponding to three respective dilution ratios. However, as mentioned above, this number is non limiting.

Back to figure 1, the device 1 comprises a support 20 configured for receiving the sample container, a light source 30 configured for illuminating the sample container, and a detector 40, configured for acquiring a fluorescence image of the sample container - and thus the sample comprised therein.

The light source 30 is configured for illuminating the sample container - and thus the sample comprised therein through the transparent wall of the wells, with at least one determined wavelength, which may be selected as a wavelength corresponding to the excitation peak of the analyte, for instance a molecule used as a marker of the microorganism that is sought for within the sample. The light source may comprise one or more light-emitting diode(s) (LED). The light source may be a monochromatic light source, or may be able to generate light on a broader spectrum, such as white light, and the illumination device may further comprise a filter (not shown) to restrict the illumination spectrum to one or more desired wavelengths of interest.

The detector 40 is configured for acquiring fluorescence images, comprising fluorescence emissions of the sample consecutive to its illumination by the light source. The detector may comprise a camera or high-sensitivity CMOS or CCD or other 2D optical sensor. Additionally, optical elements (not shown) may conform a beam of light emitted by the sample towards the detector, and optical filters may also be used to limit the detection to a wavelength of interest or a narrow-band spectrum centered on the wavelength of interest, which may typically be the fluorescence wavelength emitted by the analyte.

In embodiments, the light source and detector may be arranged on opposite sides of the sample container - in which case, the wells comprise two opposite transparent walls. In other embodiments, and as shown in the example of figure 1, the light source and detector may be arranged on a same side of the sample container. In that case, the wall of the well that is located on the side where are positioned the light source and detector is preferably transparent to the wavelengths emitted by the light source and the wavelength to be detected by the detector, and the wall opposite the transparent wall may be reflective.

In embodiments, the detector 40 is arranged with respect to the sample container such that it is able to acquire a single fluorescence image of the sample container in which all the wells of the sample container are visible. In particular, a relative position and orientation of the detector with respect to the sample container are determined according to the sample container's dimensions and to the detector's field of view.

The device 1 further comprises a computer 50, configured for processing the acquired fluorescence image to implement the method described below, in order to classify the regions of the image corresponding to the wells, herein after denoted signal regions, as positive or negative, and then infer from said classification a quantification of the concentration of microorganisms in the sample. The processing device comprises at least a processing device 51 and a memory 52. The processing device 51 may be adapted to control the operation of the device 1 and its component, and in particular to control the operation of the light source and detection device, as well as any mechanical part enabling a correct positioning of the sample container. The processing device 51 is further adapted to process the acquired fluorescence images as disclosed below. To this end, the computer may execute code instructions stored in the memory for performing the method disclosed below. The processing device may comprise one or more processors, for instance Central Processing Units (CPU) or Graphical Processing Units (GPU). The memory 52 may for instance include a magnetic hard disk, solid-state disk, optical disk, electronic memory or any type of computer-readable storage medium. The memory further stores at least one trained model configured for classifying the signal regions of the image corresponding to the wells of the sample container. The memory may also store a Most Probable Number Table used to estimate the number of microorganisms comprised within the sample from the classifications of the wells.

Last, the computer 50 may also include a display 53 for displaying one or more of the following information:

- Classification status of each well of the sample container,

- Most Probable Number, or concentration, of microorganisms comprised within the sample, and,

- any conclusion or alert relating to the sample, which may include a comparison between said number or concentration and at least one threshold for qualifying the sample according to relevant standards, and/or the result of the qualification of the sample. For instance, for a food sample, the qualification of the sample may define whether the sample if safe for human consumption. For a biological sample, the qualification of the sample may define whether a disease or contaminant or biomarker is detected.

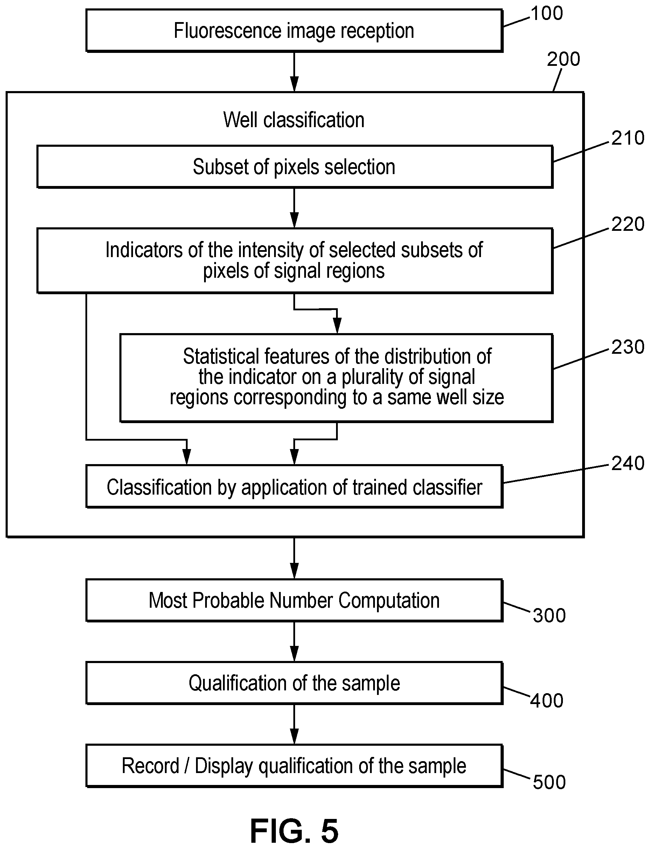

With reference to figure 5, embodiments of a method for processing a fluorescence image for detection of microorganisms in a sample will now be described. This method is implemented by a computer, for instance computer 50 described above.

The method comprises a first step 100 of receiving a fluorescence image of the sample container. This image may typically have been acquired by the detector 40 and transferred to the computer for processing.

With reference to figure 3a is shown an example fluorescence image I that may be acquired on the sample container represented in figure 2. As visible from figure 3a, the received fluorescence image may comprise regions exhibiting a fluorescence signal to be analyzed, herein after called "signal regions" R, where these regions correspond to the locations of the wells in the sample container, and the remainder of the sample container may appear black in the image. Optionally, step 100 may further include a pre-processing of the image received from the detector, in particular a formatting of the image in order to remove the areas not corresponding to the wells of the sample container, and also to crop the signal regions corresponding to the wells to determined dimensions. Said cropping may in particular allow removing upper and lower edges of the wells in order to keep only the part of the signal that is more relevant, as well as reducing the number of pixels for further processing.

An exemplary formatted fluorescence image derived from the image of figure 3a is shown in figure 3b.

Whether the fluorescence image is formatted or not before further processing by the computer, this image comprises a plurality of signal regions R, where each signal region corresponds to a single well of a determined well size and dilution ratio. Each signal region exhibits a gray level or intensity that is representative of the fluorescence emission of the well (since the detector is configured to acquire the fluorescence wavelength emitted by an analyte that is sought for), and is comprised between minimum and maximum values (for instance white and black, where black corresponds to a well where no fluorescence is detected, and white corresponds to a well where a high fluorescence signal is detected). When the sample container 10 comprises a plurality of alignments 13 of wells 11, where each alignment corresponds to a respective well size, the fluorescence image also comprises a plurality of alignments 13R of signal regions R. Since the shape, dimensions and number of wells of a sample container may be the same for a plurality of assays, the format of the fluorescence image may also be constant and therefore the positions on the image of the signal regions may be constant and determined.

Back to figure 5, the method then comprises a processing 200 of the fluorescence image to classify at least one signal region of the image as positive or negative. The determination of the signal region as being positive or negative depends on the amount of fluorescence that is detected in the region. Furthermore, depending on the type of assay, either positive or negative may correspond to microorganism growth in the well, during the incubation period that preceded the fluorescence image acquisition. Indeed, in some assays, the analyte that is detected by fluorescence is directly representative of the presence of the microorganism, and can for instance be the microorganism itself. In other types of assays, the analyte that is detected by fluorescence may be representative of a nutrient medium for the microorganism that is sought for, and that has been mixed with the sample. In that case, growth of the microorganism leads to a progressive diminution of the presence of the nutrient medium in the well and hence, a lower fluorescence signal than in wells where the microorganism is absent.

In embodiments, step 200 is implemented to classify all the signal regions of the image as positive or negative.

Step 200 comprises substeps of, for each of a plurality of signal regions of the image, including the one that is to be classified, and preferably for each signal region of the fluorescence image,

- Selecting 210 a subset of pixels within the signal region, and

- Computing 220 an indicator of the intensity of the subset of pixels.

In embodiments, the step 210 of selecting a subset of pixels within a signal region comprises computing a histogram of the pixel intensities of a signal region, and selecting only the pixels that are within a determined range of percentiles, i.e. excluding the pixels that are below and above a respective threshold.

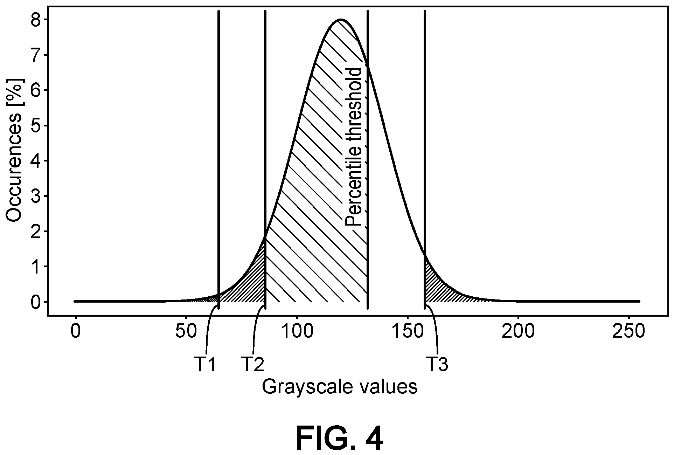

Reference is made to figure 4 which represents an exemplary histogram of the grayscale values of the pixels of a signal region of a fluorescence image. One can notice in this image a first threshold T1 which corresponds to the background noise. The lower threshold of the determined range of percentile should be above T1 to remove the background noise. Furthermore, the upper and lower tails of the distribution may also be removed (corresponding respectively to thresholds T2 and T3). In embodiments, the lower threshold of the determined range of percentile is strictly higher than the threshold T2 required to remove the lower tail of the distribution, to ensure removing pixels of the signal regions that may correspond to defects such as bubbles or inhomogeneities, thereby improving the accuracy of the results.

Furthermore, as the signal regions corresponding to each different well size differ in size and in shape, a plurality of ranges of percentiles may be defined and associated respectively with each well size. Therefore, selecting a subset of pixels in a considered signal region may comprise selecting pixels within a predefined range of percentiles that is selected according to the size of the well corresponding to the signal region. As a non-limiting example, a suitable range of percentiles for selecting pixels may for instance be between the $70^{th}$ percentile and the $95^{th}$ percentile.

Once a subset of pixels has been selected for a signal region, computing the indicator of the intensity of the selected subset of pixels that is computed may for instance be a mean intensity (i.e. mean gray value) of the selected subset of pixels. In other embodiments, the indicator may also be a mode of the intensity of the selected subset of pixels, where the mode is the intensity value which is the most represented in the subset of pixels.

According to still another embodiment, the indicator of the intensity of the selected subset of pixels may also be a determined percentile thereof, for instance the $90^{th}$ percentile.

Once this indicator is computed for a plurality, or all, the signal regions of the fluorescence image, the method comprises, for each well size, computing statistical features 230 related to the distribution of said indicator over a plurality of signal regions corresponding to said well size. In other words, when the indicator is computed on a number k.N of wells, where k>1 is the number of different well sizes and N >1 is the number of wells of each well size, then for each well size, a number N of values of the indicator is available and statistical features may be computed on said N values.

In embodiments, the statistical features that are computed on the indicator for each well size comprise a mean m and a standard deviation $\sigma$ of said indicator, over the plurality of signal regions of the image corresponding to a same well size.

Back to the example that was represented in figures 2 to 3b, when the sample container comprises wells of three different sizes "S", "M" and "L", step 230 may include computing :

- A mean ms and standard deviation $\sigma_S$ of the values of the indicator computed on the plurality of signal regions corresponding to wells of the size "S",

- A mean $m_M$ and standard deviation $\sigma_M$ of the values of the indicator computed on the plurality of signal regions corresponding to wells of the size "M",

- A mean $m_L$ and standard deviation $\sigma_L$ of the values of the indicator computed on the plurality of signal regions corresponding to wells of the size "L".

Then, the method comprises determining 240 whether a considered signal region is positive or negative, by application of a trained classifier algorithm receiving as input at least the following:

- The value of the indicator of the intensity of the selected subset of pixels computed for the considered signal region, and

- The statistical features computed at step 230 regarding the distribution of the indicator for each well size.

Taking into account not only the intensity of the pixels of the signal region but also the context, i.e. the statistical features of the indicators computed on the other signal region, enables a more accurate classification.

In embodiments, the trained classifier may be a Support Vector Machine (SVM) classifier, with a kernel that may be selected as rbf or linear.

In embodiments, the classifier may have been preliminary trained on a dataset comprising a plurality of fluorescence image and, for each signal region of each image, an annotation of the signal region as positive or negative. The dataset was split between a training set for training, and a test set for validation. The classifier is thus trained to classify each signal region among two predefined classes, namely "positive" and "negative". This annotation may be performed manually by experts. Furthermore, the classifier may also be trained specifically for a determined microorganism, e.g. bacteria that is analyzed. In that case, all the data upon which the classifier is trained corresponds to assays related to the considered microorganism.

In embodiments, a plurality of classifiers may furthermore be trained respectively for each well size. For instance, considering the training dataset mentioned above, and considering that the fluorescence images of this dataset comprise signal regions corresponding to three different well sizes, then the signal regions corresponding to each well size may be separately used to train three respective classifiers. Therefore, step 240 comprises selecting and using, for each signal region to classify, a trained classifier associated with the well size corresponding to the signal region. This in particular enables, during training of the classifier, to optimize the training of each classifier according to the specific geometries of the different signal regions corresponding to the different well sizes.

In embodiments, step 240 is performed for all the signal regions of the fluorescence image, such that all the signal regions of the fluorescence image are classified as positive or negative.

In embodiments, the method then comprises a step 300 of computing, from the classifications of the signal regions, and knowing the dilution ratios associated with the different well sizes, a Most Probable Number of microorganisms present in the sample. The computation of a Most Probable Number is a technique well known to the skilled person, One may for instance refer to Alexander, M. 1982. Most probable number method for microbial populations. p. 815-820. In A.L. Page et al. (ed.) Methods of soil analysis. Part 2. 2nd ed. Agron. Monogr. 9. ASA and SSSA, Madison, WI.

In embodiments, once the Most Probable Number is computed, the method may further comprise comparing 400 said number to a predetermined threshold, and inferring a qualification of the tested sample, such as whether the tested sample is safe for human consumption, or, for a biological sample, whether a disease or contaminant or biomarker is detected. The computed Most Probable Number, and as the case may be its comparison to a threshold and/or the conclusion or qualification of the sample, may also be displayed 500 to a human user, and/or recorded in a memory such as, but not limitatively, the computer's memory. When a contamination has been detected or when the tested sample is not safe for human consumption, an alert may be issued and displayed on the screen 53. This alert may enable, regarding a food sample, to prevent said sample and the batch from which it was issued to be delivered on the market.

**Examples**

According to a non-limiting example, three SVM classifiers were trained on fluorescence images corresponding to the sample container shown in figure 2, and formatted according to the example displayed in figure 3b. The indicator of the intensity of the selected subset of pixels was chosen as the mean intensity, and the statistical features for each well size were the mean and standard deviation of the mean intensity, over all the signal regions corresponding to the considered well size.

Further, each SVM classifier was trained on signal regions corresponding to a determined well size. Furthermore, because different bacterial types and analysis exhibit distinct properties, dedicated SVM classifiers were trained for each. Below is a table summarizing the sizes of the training sets and test sets for each of a plurality of bacterial types, where the following acronyms apply:

- AC: Aerobic Count
- CAM: Campylobacter
- EB: Enterobacteriaceae
- STA: Staphylococcus
- TC: Total Conforms
- YM: Yeast/Mold

| Bacterial type | Training Set | Test Set |
|---|---|---|
| AC | 1554 | 273 |
| CAM | 82 | 12 |
| EB | 1456 | 255 |
| STA | 871 | 372 |
| TC | 1390 | 246 |
| YM | 345 | 258 |

The results obtained for the three SVM classifiers for each bacterial types are summed up in the following table, where the accuracy is estimated in comparison with the algorithm employed in the prior art (with manually tuned parameters) that is considered a gold standard.

| Bacterial type | Accuracy Small | Accuracy Medium | Accuracy Large |
|---|---|---|---|
| YM | 100% | 100% | 99.76% |
| STA | 99.95% | 99.98% | 99.92% |
| CAM | 100% | 100% | 100% |
| AC | 99.97% | 100% | 99.72% |
| EB | 100% | 97.57% | 96.86% |
| TC | 99.94% | 99.87% | 100% |

The accuracy of the classifier is defined as the rate of correct predictions, and may be computed as:

$$\frac{TP + TN}{TP + TN + FP + FN}$$

Where:

- TP is the number of True Positive Predictions, i.e. correct classification as positive,
- TN is the number of True Negative Predictions, i.e. correct classification as negative,
- FP is the number of False Positive Predictions, i.e. predictions incorrectly classified as positive, and
- FN is the number of False Negative Predictions, i.e. predictions incorrectly classified as negative.

As the algorithm employed in the prior art is considered the gold standard, a correct classification corresponds to the same classification as provided by said algorithm. The performance of the trained SVMs is thus comparable to the one of the gold standard algorithm, without the need to rely on manually defined parameters.

## Claims

1. A computer-implemented method for processing a fluorescence image for detection of microorganisms in a sample, comprising:

   - Receiving (100) a fluorescence image of the sample, wherein the fluorescence image has been acquired from a sample container comprising a plurality of wells of at least two different sizes, and the fluorescence image comprises a plurality of signal regions corresponding respectively to each well, and
   - Processing (200) the fluorescence image to classify at least one considered signal region as positive or negative, wherein one of positive or negative indicates microorganism growth in the corresponding well, comprising:

     ◦ For each of a plurality of signal regions in the fluorescence image, including at least the considered signal region,

9

- selecting (210) a subset of pixels within the signal region,
- computing (220) an indicator of the intensity of the selected subset of pixels,

○ For each well size, computing statistical features (230) related to a distribution of the indicator of the intensity of selected subsets of pixels, computed for a plurality of signal regions corresponding to said well size, and

○ Determining whether the considered signal region is positive or negative, by applying a trained classifier algorithm (240) to input data comprising at least:

- the indicator of the intensity of the selected subset of pixels computed for the considered signal region, and
- the statistical features representing the distribution of the indicator computed for each well size.

2. The computer-implemented method according to claim 1, wherein determining whether a considered signal region is positive or negative further comprises selecting, based on the size of the well corresponding to the considered signal region, one among a plurality of classifier algorithms, where each classifier algorithms has been trained to classifiy signal regions corresponding to a respective well size.

3. The computer-implemented method according to claim 1 or 2, wherein the classifier algorithm is a Support Vector Machine (SVM) algorithm.

4. The computer-implemented method according to claim 3, wherein the SVM has a rbf or linear kernel.

5. The computer-implemented method according to any of the preceding claims, wherein the classifier algorithm has been trained on a training dataset comprising, for each of a plurality of fluorescence images, an indication that each signal region is positive or negative.

6. The computer-implemented method according to any of the preceding claims, wherein the indicator of the intensity of the selected subset of pixels is chosen among:

- a mean intensity of the selected subset of pixels,
- a mode of the intensity of the selected subset of pixels, and
- a determined percentile of the selected subset of pixels.

7. The computer-implemented method according to any of the preceding claims, wherein the statistical features representative of the distribution of the indicator of the intensity of the selected subsets of pixels for the signal regions corresponding to a well size comprise a mean and a standard deviation of said indicator, over the plurality of signal regions of the image corresponding to the same well size.

8. The computer-implemented method according to any of the preceding claims, wherein selecting (210) a subset of pixels from a signal region comprises computing a histogram of the pixels intensities of a signal region, and selecting pixels corresponding to a predefined range of percentiles.

9. The computer-implemented method according to the preceding claim, wherein each well size is associated with a respective predefined range of percentiles, and selecting pixels corresponding to a predefined range of percentiles comprises selecting the range of percentiles associated with the size of the well corresponding to the signal region.

10. The computer-implemented method according to any of the preceding claims, wherein the fluorescence image has been acquired from a sample container where each well size corresponds to a respective dilution ratio of the sample, and the method comprises classifying a plurality of signal regions corresponding to each well size of the fluorescence image as positive or negative and computing, from the classifications of the signal regions, a Most Probable Number of microorganisms present in the sample.

11. A computer-program product comprising code instructions for implementing the method according to any of the preceding claims, when it is implemented by a computer (50).

12. A computer (50), configured for implementing the method according to any of claims 1 to 10.

13. A device (1) for measuring the concentrations of microorganisms in a sample, comprising:

- A support (20), configured for receiving a sample container (10), comprising a plurality of wells of at least two different sizes (11), where each well size corresponds to a respective dilution ratio of the sample,
- A light source (30), configured for illuminating the sample container with at least one determined wavelength,
- A detector (40), configured for acquiring at least one fluorescence image comprising fluorescence emissions of the sample due to its illumination by the light source, and
- A computer (50), configured for processing the acquired fluorescence image to determine the concentrations of microorganisms in the sample,

**characterized in that** the computer (50) is configured for implementing the method according to any of claims 1 to 10.

**FIG. 1**

FIG. 2

FIG. 3a

FIG. 3b

FIG. 4

```
┌─────────────────────────────────────────────┐
│        Fluorescence image reception          │──100
└─────────────────────────────────────────────┘
                      │
                      ▼
┌───────────────────────────────────────────────────┐  200
│                Well classification                 │
│  ┌───────────────────────────────────────────┐     │
│  │        Subset of pixels selection         │─────┼──210
│  └───────────────────────────────────────────┘     │
│                    │                                │
│                    ▼                                │
│  ┌───────────────────────────────────────────┐     │
│  │  Indicators of the intensity of selected  │─────┼──220
│  │     subsets of pixels of signal regions   │     │
│  └───────────────────────────────────────────┘     │
│                          │                          │
│                          ▼                          │
│       ┌──────────────────────────────────────┐     │
│       │  Statistical features of the         │─────┼──230
│       │  distribution of the indicator on a  │     │
│       │  plurality of signal regions         │     │
│       │  corresponding to a same well size   │     │
│       └──────────────────────────────────────┘     │
│          │                   │                      │
│          ▼                   ▼                      │
│  ┌───────────────────────────────────────────┐     │
│  │  Classification by application of         │─────┼──240
│  │          trained classifier               │     │
│  └───────────────────────────────────────────┘     │
└───────────────────────────────────────────────────┘
                      │
                      ▼
┌─────────────────────────────────────────────┐
│      Most Probable Number Computation        │──300
└─────────────────────────────────────────────┘
                      │
                      ▼
┌─────────────────────────────────────────────┐
│          Qualification of the sample         │──400
└─────────────────────────────────────────────┘
                      │
                      ▼
┌─────────────────────────────────────────────┐
│  Record / Display qualification of the sample│──500
└─────────────────────────────────────────────┘
```

# FIG. 5

Europäisches
Patentamt

European
Patent Office

Office européen
des brevets

## EUROPEAN SEARCH REPORT

**Application Number**

EP 24 30 6022

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | US 2022/340952 A1 (KIRBY JAMES E [US] ET AL) 27 October 2022 (2022-10-27)<br>* paragraphs [0109], [0112], [0111], [0120] * | 1-8, 10-13<br>9 | INV.<br>G06V20/69 |
| A | JP 2016 164561 A (STRAUS HOLDINGS INC) 8 September 2016 (2016-09-08)<br>* the whole document * | 1-13 | |

| | | | TECHNICAL FIELDS SEARCHED (IPC) |
|---|---|---|---|
| | | | G06V |

The present search report has been drawn up for all claims

| Place of search | Date of completion of the search | Examiner |
|---|---|---|
| The Hague | 18 November 2024 | Stan, Johann |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 30 6022

This annex lists the patent family members relating to the patent documents cited in the above-mentioned European search report.
The members are as contained in the European Patent Office EDP file on
The European Patent Office is in no way liable for these particulars which are merely given for the purpose of information.

18-11-2024

| Patent document cited in search report | Publication date | Patent family member(s) | Publication date |
|---|---|---|---|
| US 2022340952 A1 | 27-10-2022 | CA 3153347 A1 | 08-04-2021 |
| | | EP 4038196 A1 | 10-08-2022 |
| | | US 2022340952 A1 | 27-10-2022 |
| | | WO 2021067170 A1 | 08-04-2021 |
| JP 2016164561 A | 08-09-2016 | AU 2009296526 A1 | 01-04-2010 |
| | | AU 2009296528 A1 | 01-04-2010 |
| | | AU 2009296662 A1 | 01-04-2010 |
| | | AU 2015243006 A1 | 05-11-2015 |
| | | CA 2738264 A1 | 01-04-2010 |
| | | CA 2738287 A1 | 01-04-2010 |
| | | CA 2738317 A1 | 01-04-2010 |
| | | CN 102224260 A | 19-10-2011 |
| | | CN 102224410 A | 19-10-2011 |
| | | CN 102239245 A | 09-11-2011 |
| | | CN 107121396 A | 01-09-2017 |
| | | EP 2340300 A1 | 06-07-2011 |
| | | EP 2340301 A1 | 06-07-2011 |
| | | EP 2344679 A1 | 20-07-2011 |
| | | JP 5685538 B2 | 18-03-2015 |
| | | JP 5699083 B2 | 08-04-2015 |
| | | JP 6015889 B2 | 26-10-2016 |
| | | JP 2012503779 A | 09-02-2012 |
| | | JP 2012503780 A | 09-02-2012 |
| | | JP 2012503781 A | 09-02-2012 |
| | | JP 2016164561 A | 08-09-2016 |
| | | US 2012045826 A1 | 23-02-2012 |
| | | US 2012046203 A1 | 23-02-2012 |
| | | US 2012149007 A1 | 14-06-2012 |
| | | US 2019366338 A1 | 05-12-2019 |
| | | US 2023120417 A1 | 20-04-2023 |
| | | US 2024091770 A1 | 21-03-2024 |
| | | WO 2010036808 A1 | 01-04-2010 |
| | | WO 2010036827 A1 | 01-04-2010 |
| | | WO 2010036829 A1 | 01-04-2010 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Most probable number method for microbial populations. **ALEXANDER, M. et al.** Methods of soil analysis.. ASA and SSSA, 1982, 815-820